(19) Europäisches Patentamt
European Patent Office
Office européen des brevets

(11) **EP 3 615 708 B1**

(12) **EUROPÄISCHE PATENTSCHRIFT**

(45) Veröffentlichungstag und Bekanntmachung des Hinweises auf die Patenterteilung:
**19.05.2021  Patentblatt 2021/20**

(21) Anmeldenummer: **18725111.1**

(22) Anmeldetag: **24.04.2018**

(51) Int Cl.:
*C25B 1/00* (2021.01)　　　*C01B 32/19* (2017.01)

(86) Internationale Anmeldenummer:
**PCT/EP2018/060433**

(87) Internationale Veröffentlichungsnummer:
**WO 2018/197462 (01.11.2018 Gazette 2018/44)**

(54) **VERFAHREN ZUR HERSTELLUNG EINES HALBLEITER- ODER LEITER-MATERIALS UND DESSEN VERWENDUNG**

METHOD FOR PRODUCING A SEMICONDUCTOR OR CONDUCTOR MATERIAL, AND USE THEREOF

PROCÉDÉ DE FABRICATION D'UN MATÉRIAU SEMI-CONDUCTEUR OU CONDUCTEUR ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2017  DE 102017207045**

(43) Veröffentlichungstag der Anmeldung:
**04.03.2020  Patentblatt 2020/10**

(73) Patentinhaber: **Sixonia Tech GmbH**
**01187 Dresden (DE)**

(72) Erfinder:
• **LOHE, Martin**
  **01187 Dresden (DE)**
• **FENG, Xinliang**
  **01309 Dresden (DE)**
• **YANG, Sheng**
  **71069 Sindelfingen (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
**US-A1- 2013 001 089     US-A1- 2013 161 199 US-A1- 2014 166 496**

• **WONBONG CHOI ET AL: "Synthesis of Graphene and Its Applications: A Review", CRITICAL REVIEWS IN SOLID STATE AND MATERIALS SCIENCES, Bd. 35, Nr. 1, 11. Februar 2010 (2010-02-11), Seiten 52-71, XP055498686, US ISSN: 1040-8436, DOI: 10.1080/10408430903505036**
• **COOPER ADAM J ET AL: "Single stage electrochemical exfoliation method for the production of few-layer graphene via intercalation of tetraalkylammonium cations", CARBON, Bd. 66, 11. September 2013 (2013-09-11), Seiten 340-350, XP028758947, ISSN: 0008-6223, DOI: 10.1016/J.CARBON.2013.09.009**
• **NA LIU ET AL: "Large-Area Atomically Thin MoS 2 Nanosheets Prepared Using Electrochemical Exfoliation", ACS NANO, Bd. 8, Nr. 7, 22. Juli 2014 (2014-07-22), Seiten 6902-6910, XP055345480, US ISSN: 1936-0851, DOI: 10.1021/nn5016242**

**Beschreibung**

Gegenstand der Erfindung ist ein Verfahren zur Herstellung eines Halbleiter- oder LeiterMaterials aus Monolagen oder mit geschichteter Struktur durch elektrolytische Exfolierung und dessen Verwendung.

Die Isolierung einzelner Schichten zweidimensional strukturierter oder geschichteter Halbleiter- oder Leitermaterialien ist seit einigen Jahren von Interesse, nicht zuletzt, da die Verwendung dieser Materialien in elektronischen Bauteilen zu enormen Leistungssteigerungen und effizienten Anwendungen führt.

Ein Beispiel für eine solche isolierte Schicht eines zweidimensional strukturierten oder geschichteten Materials ist Graphen, welches eine Monolage, also eine einzelne, nur eine Atomlage dicke Schicht des Graphits, einer natürlich vorkommenden Erscheinungsform des Kohlenstoffs in Reinform, darstellt. Graphen bezeichnet aber auch Material, in dem einige dieser Monolagen übereinander geschichtet angeordnet sind.

Graphen kann als ein zweidimensionales Netzwerk aneinandergeketteter Benzolringe verstanden werden, welches u.a. eine enorme elektrische Leitfähigkeit aufweist. Durch seine elektronischen, thermischen, optischen und mechanischen Eigenschaften ist seine Verwendung auf vielen Gebieten der Technik von großem Interesse. Verfahren zur skalierbaren und effizienten Herstellung von qualitativ hochwertigem, möglichst aus der Lösung heraus prozessierbaren Leiter- und Halbleitermaterialien, wie beispielsweise Graphen, sind deshalb Gegenstand intensiver Forschungsarbeiten.

Die Exfolierung von Graphit zur Herstellung von Graphen, beispielsweise in Form von Flakes oder Flocken stellt eine kostengünstige und verlässliche Strategie zu dessen Gewinnung dar.

Graphen Schichten als Flocken wurden bereits erfolgreich aus Graphit als Grundmaterial in festem Zustand (siehe beispielsweise i) K. S. Novoselov, A. K. Geim, S. V. Morozov, D. Jiang, Y. Zhang, S. V. Dubonos, I. V. Grigorieva, A. A. Firsov, Science 2004, 306, 666-669; ii) V. Leon, M. Quintana, M. A. Herrero, J. L. G. Fierro, A. d. I. Hoz, M. Prato, E. Vazquez, Chem. Commun. 2011, 47, 10936-10938) oder in flüssiger Phase (siehe beispielweise i) Z. Y. Xia, S. Pezzini, E. Treossi, G. Giambastiani, F. Corticelli, V. Morandi, A. Zanelli, V. Bellani, V. Palermo, Adv. Funct. Mater. 2013, 23, 4684-4693; b) A. Ciesielski, P. Samori, Chem. Soc. Rev. 2014, 43, 381-398.) isoliert.

Auch durch die Reduktion von Graphenoxid, welches beispielsweise durch die sogenannte Hummers Methode (W.S. Hummers et al. J. Am. Chem. Soc. 1958, 80, 6, 1339) hergestellt werden kann, wurde Graphen erfolgreich hergestellt. Nachteilig verbleiben bei den Reduktionsmethoden jedoch stets Oxidgruppen und weitere Defekte, wie Löcher oder nicht sechs-zählige Ringe innerhalb des Materials. Diese strukturellen Defekte führen zu starken Einschränkungen der elektronischen und thermischen Eigenschaften des so erzeugten Graphens (C. Gómez-Navarro, R. T. Weitz, A. M. Bittner, M. Scolari, A. Mews, M. Burghard, K. Kern, Nano Lett. 2007, 7, 3499-3503).

Die Behandlung von Graphit in flüssiger Phase in organischen Lösungsmitteln ermöglicht dagegen die Herstellung mit deutlich weniger Defekten (siehe beispielsweise a) F. Bonaccorso, A. Bartolotta, J. N. Coleman, C. Backes, Adv. Mater. 2016, 28, 6136-6166; b) A. Ciesielski, S. Haar, M. El Gemayel, H. Yang, J. Clough, G. Melinte, M. Gobbi, E. Orgiu, M. V. Nardi, G. Ligorio, V. Palermo, N. Koch, O. Ersen, C. Casiraghi, P. Samorì, Angew. Chem. Int. Ed. 2014, 53, 10355-10361). Nachteilig erreicht man damit nur geringe Ausbeuten an exfoliertem Graphen und kleine Schichtgrößen (J. N. Coleman, Acc. Chem. Res. 2013, 46, 14-22).

Eine weitere Möglichkeit zur Exfolierung von Graphen findet sich in der Elektrolyse von Graphithaltigen Elektroden. Eine Übersicht über die verschiedenen Methoden der elektrochemischen Exfolierung ist beispielsweise in P. Yu et al, Curr. Opinion in Colloid Interface Science, 2015, 20, 329 - 338. gegeben.

So wird darin in einer Literaturstelle beschrieben, dass Graphen in wässrigen Elektrolyten, enthaltend $H_2SO_4$ oder $H_3PO_4$ mit einer Wechselspannung von +7 - -7 V exfoliert wird.

Eine weitere Literaturstelle in der o.g. Publikation offenbart die elektrochemische Exfolierung von Graphen aus Graphit, wobei zunächst Propylencarbonat und Lithiumionen zugegeben werden, welche zwischen die Schichten interkalieren In einem weiteren, zweiten Schritt werden Tetrabutylammoniumkationen zugegeben und die Ausdehnung von Graphit wird beobachtet. Zu diesem schon ausgedehnten Graphit wurde dann ein Aryldiazoniumsalz zugegeben, um Graphen zu exfolieren und mit Aryldiazoniumgruppen zu funktionalisieren.

Legt man an graphithaltige Elektroden eine elektrische Spannung in einer Elektrolysezelle an, so verursacht der fließende elektrische Strom eine Wanderung der geladenen Ionen des Elektrolyten in das Graphit-Material und damit zwischen die einzelnen Schichten (engl. Intercalation - Einschiebung), so dass diese auseinander getrieben werden (C. T. J. Low, F. C. Walsh, M. H. Chakrabarti, M. A. Hashim, M. A. Hussain, Carbon 2013, 54, 1-21).

Die elektrochemische Exfolierung von Halbleiter- oder Leitermaterialien aus zweidimensional strukturierten oder geschichteten Grundmaterialien, wie beispielsweise Graphit, stellt eine kostengünstige und sehr effiziente Möglichkeit zur Abspaltung einzelner Schichten dar.

Das zweidimensional strukturierte Grundmaterial kann dabei entweder als Anode in wässrigen Lösungen ionischer Flüssigkeiten (siehe beispielsweise X. Wang, P. F. Fulvio, G. A. Baker, G. M. Veith, R. R. Unocic, S. M. Mahurin, M. Chi, S. Dai, Chem. Commun. 2010, 46, 4487-4489) oder mineralischer Säuren (siehe beispielsweise a) K. S. Rao, J. Sentilnathan, H.-W. Cho, J.-J. Wu, M. Yoshimura, Adv. Funct. Mater. 2015, 25,298-305; b) K. Parvez, R. Li, S. R. Puniredd, Y. Hernandez, F. Hinkel, S. Wang, X. Feng, K. Müllen, ACS Nano 2013, 7, 3598-3606) oder anorganischer Salze (z.B.(a) K. Parvez, Z.-S. Wu, R. Li, X. Liu, R. Graf, X. Feng, K. Müllen, J. Am. Chem. Soc. 2014, 136, 6083-6091; b) S. Yang, S. Brüller, Z.-S. Wu, Z. Liu, K. Parvez, R. Dong, F. Richard, P. Samorì, X. Feng, K. Müllen, J. Am. Chem. Soc. 2015, 137, 13927-13932) geschalten werden. Unter Einfluss des elektrischen Stromes werden dabei Elektronen vom zweidimensional strukturierten Grundmaterial, z.B. Graphit, abgespalten hinterlassen eine positive Ladung an der Anode. Die Anionen des Elektrolyten können dann leicht zwischen die einzelnen Schichten des Grundmaterials, z.B. Graphit, geschoben werden und diese abspalten.

Auch das Einbringen des Grundmaterials als Kathode ist möglich, u.a. in organischen Lösungsmitteln, enthaltend Lithiumsalze (Z. Zeng, Z. Yin, X. Huang, H. Li, Q. He, G. Lu, F. Boey, H. Zhang, Angew. Chem. Int. Ed. 2011, 50, 11093-11097) oder quartäre Ammoniumsalze (A. J. Cooper, N. R. Wilson, I. A. Kinloch, R. A. W. Dryfe, Carbon 2014, 66, 340-350). Eine elektrisch negative Ausrichtung der Kathode zieht dabei die positiv geladenen Ionen des Elektrolyten an, welche wiederum zwischen die einzelnen Schichten des Grundmaterials dringen und deren Abspaltung erleichtern.

Die anodische Exfolierung erzielt dabei gute Herstellungsraten (über 10 g/h), dünnschichtiger Graphene Flocken aus 1 bis 3 Monolagen Graphen in hohen Ausbeuten von bis zu 70%. Auch die durchschnittliche Breite der Flocken ist mit bis zu 5 $\mu$m relativ hoch. Nachteilig enthält das so hergestellte Graphen jedoch hohe Anteile an Sauerstoffgruppen. Grund dafür sind Sauerstoffradikale wie HO· Oder O·, die während des Herstellungsprozesses durch die Spaltung von Wasser gebildet werden und an die Graphenschichten addieren (siehe K. S. Rao, J. Sentilnathan, H.-W. Cho, J.-J. Wu, M. Yoshimura, Adv. Funct. Mater. 2015, 25, 298-305).

Die kathodische Exfolierung ermöglicht dagegen die Hestellung reinen Graphens, nachteilig jedoch mit sehr hohen Schichtdicken von mindestens 5 Lagen und relativ niedrigen Herstellungsraten von 0,5 bis 2 g pro Stunde (A. M. Abdelkader, I. A. Kinloch, R. A. W. Dryfe, ACSAppl. Mater. Interfaces 2014, 6, 1632-1639).

Ein periodischer Wechsel der Funktion der einzelnen Elektroden zwischen Anode und Kathode wurde erstmals von Liu et al. beschrieben (Liu J, Yang H, Zhen SG, Poh CK, Chaurasia A, Luo J, et al. "A green approach to the synthesis of high-quality graphene oxide flakes via electrochemical exfoliation of pencilcore". RSC Adv. 2013; 3, 11745-50.) Eine anodische Spannung von +7 bis -7 V wurde an zwei Graphit Elektroden in wässrigen Elektrolyten, enthaltend Schwefelsäure oder Phosphorsäure, angelegt. Offenbart ist ein periodischer Wechsel der Funktion der einzelnen Elektroden zwischen Anode und Kathode, wobei die Frequenz des Wechsels bei < 0,00166 Hz liegt. Nachteilig bildeten sich dabei sehr dicke geschichtete Graphen Flocken mit einer Dicke von 3 - 9 nm (>10 Atomlagen).

EP 2878709 A1 beschreibt ein Verfahren zur Herstellung zweidimensional strukturierter Kohlenstoff-Materialien durch elektrochemische Exfolierung, wobei mindestens eine der Elektroden ein kohlenstoffhaltiges Grundmaterial mit Schichtstruktur umfasst und durch Anlegen einer Spannung mittels Gleichstrom Graphen von dieser Elektrode abgespalten wird. Die verwendete Elektrolytlösung enthält ein Ammonium-Kation und ein anorganisches Schwefelhaltiges Anion. Das Ammonium-Kation kann dabei 4 Alkyl-Reste am Stickstoff aufweisen. In einer Ausführungsform kann während der Elektrolyse die Polarität der Elektroden umgekehrt werden.

Auch von Su et al. (Su C.Y, Lu A.Y, Xu Y, Chen F.R, Khlobystov A.N, Li L.J. "High-quality thin graphene filmsfrom fast electrochemical exfoliation". ACS Nano 2011; 5:2332-9) ist ein Verfahren für die elektrolytische Exfolierung von Graphen aus Graphit bekannt. Dabei wird eine Graphitelektrode zunächst als Anode geschaltet, eine Platinelektrode bildet die Gegenelektrode. Als Elektrolyt dient eine wässrige Lösung, enthaltend Schwefelsäure und Kaliumhydroxid, um den pH-Wert bei 1,2 einzustellen.

Zunächst wird an die Graphit-Elektroden eine niedrige Spannung von +2,5 V angelegt, um die Oberfläche der Elektrode zu befeuchten und das Eindringen der Anionen zwischen die Graphit-Schichten zu forcieren. Nachteilig erfolgt dabei auch in hohem Maße eine Oxidation des Graphits. Die Elektrolyse wird mittels Gleichstrom betrieben, welcher periodisch die Richtung wechseln kann. Wird die Elektrode als Kathode geschaltet, so erfolgt die Reduktion des Graphenoxids. Die Umkehr der Polarität der Elektroden erfolgt mit einer Periodendauer von 2s bis 1 min. Nachteilig beträgt die Ausbeute an exfoliertem Graphen nur 5 bis 8 m% des eingesetzten Graphits.

Aufgabe der Erfindung ist die Bereitstellung eines kostengünstigen, effizienten und skalierbaren Verfahrens zur Herstellung von Leiter- und/oder Halbleitermaterialien, insbesondere Graphen, aus zweidimensional strukturiertem, geschichteten Grundmaterialien mittels Exfolierung.

Gelöst wird die Aufgabe durch ein Verfahren zur Herstellung eines Halbleiter- oder Leitermaterials aus einem zweidimensional geschichtet strukturierten Grundmaterial durch elektrolytische Exfolierung, in einer Elektrolysezelle, umfassend mindestens ein Elektrodenpaar aus einer ersten und einer zweiten Elektrode, und eine Elektrolytlösung, enthaltend mindestens ein gelöstes Tetraalkylammoniumsalz oder mindestens ein gelöstes Tetraalkylammoniumsalz und Schwefelsäure wobei das Anion des Tetraalkylammoniumsalzes ausgewählt ist aus Sulfat, Hydrogensulfat, Thiosulfat, Sulfit, Nitrat oder Hydroxid,

wobei beide Elektroden des Elektrodenpaares das zweidimensional geschichtet strukturierte Grundmaterial enthalten, und wobei während der Elektrolyse die Polarität der ersten und zweiten Elektrode periodisch umgekehrt wird, wobei die Umkehr der Polarität der Elektroden durch Anlegen einer Wechselspannung erfolgt und wobei die Umkehrfrequenz der Wechselspannung bevorzugt 0,001 bis 10 Hz beträgt.

Im Sinne der Erfindung ist ein Leiter- oder Halbleiter-Material ein elektrisch leitendes Material mit einer hochgeordneten, geschichteten Struktur, bestehend aus einer Monolage des Materials oder aus mehreren übereinander angeordnete Lagen des Materials. Das HalbleiterMaterial weist eine spezifische Bandlücke auf, die aus der Energiedifferenz zwischen dem Valenzband und Leitungsband gebildet wird.

In einer Ausführungsform ist das Halbleiteroder Leiter-Material ausgewählt aus Graphen, Graphenderivaten, kohlenstoffbasierten Halbleiter- oder Leiter-Polymeren und/oder geschichteten Chalcogeniden der allgemeinen Formel $MQ_2$, wobei gilt M = Ti, Zr, Hf, V, Nb, Ta, Mo oder W und wobei gilt Q = O, S, Se oder Te.

In einer Ausführungsform ist das zweidimensional geschichtet strukturierte Grundmaterial ausgewählt aus Graphit, kohlenstoffbasierten Halbleiter- oder Leiter-Polymeren in Form von zweidimensional strukturiertem Grundmaterial und/oder geschichteten Chalcogeniden. Graphit kann dabei natürlich vorkommendes oder synthetisch hergestelltes Graphit sein.

Die Exfolierung des Halbleiter- oder Leitermaterials aus dem oder von dem zweidimensional, geschichtet strukturierten Grundmaterial erfolgt elektrolytisch in einer Elektrolysezelle, welche mindestens ein Elektrodenpaar enthält. Ein Elektrodenpaar umfasst eine erste Elektrode E1 und eine zweite Elektrode E2. Beide Elektroden des Elektrodenpaares enthalten das Grundmaterial.

In einer Ausführungsform enthält mindestens eine Elektrode das Grundmaterial in Form von Flocken, Pulver, Fasern, Folien, Stücken, Pasten oder eine Mischung dieser. Die Elektrode kann auch eine einzelne Flocke des Grundmaterials sein, oder mehrere dieser Flocken, die entweder aneinandergepresst oder durch ein leitfähiges Material miteinander verbunden sind.

In einer Ausführungsform ist die Elektrolytlösung der Elektrolysezelle eine wässrige Lösung.

In einer weiteren Ausführungsform enthält die Elektrolytlösung mindestens ein polares organisches Lösungsmittel, beispielsweise Propylencarbonat oder Acetonitril.

Zu Beginn der Elektrolyse wird das mindestens eine Elektrodenpaar in die Elektrolytlösung eingebracht und die Elektrolyse so betrieben, dass sich die Polarität der ersten und der zweiten Elektrode periodisch umkehrt.

Erfindungsgemäß erfolgt die Umkehr der Polarität durch Anlegen einer Wechselspannung zwischen der ersten und der zweiten Elektrode. Periodisch wechselt damit die Funktion jeder Elektrode zwischen Anode und Kathode.

In einer Ausführungsform beträgt die Spannung, bei welcher die Elektrolyse betrieben wird, +/- 2 V bis +/-20 V, bevorzugt +/- 5V bis +/- 15 V, besonders bevorzugt +/-10 V.

Beide Elektroden des Elektrodenpaares enthalten das zweidimensional geschichtet strukturierte Grundmaterial.

Ist eine Elektrode gerade als Anode geschaltet, so erfolgt im Anodenbereich zunächst die Bildung von sauerstoffhaltigen Radikalen wie HO oder O welche die Grenzflächen oder intrinsischen Defekte des Grundmaterial angreifen und daran addieren, wobei sich Oxide des Grundmaterials bilden. Gleichzeitig werden die Randschichten des Grundmaterials auseinandergetrieben, sodass sich die Anionen des Elektrolyten weit dazwischenschieben können und den Abstand der einzelnen Schichten des Grundmaterials aufdehnen.

Wird im nächsten Moment die Polarität der Elektrode umgekehrt, erfolgt die Reduktion der Anionen, wobei sich ein Gas bildet, das die einzelnen Schichten des Grundmaterials noch weiter auseinandertreibt. Gleichzeitig erfolgt eine Reduktion der Sauerstofffunktionalitäten an der nun als Kathode geschalteten Elektrode, womit aus den Oxiden des Grundmaterials wieder das Grundmaterial entsteht und Sauerstoffdefekte entfernt werden.

Auch die Interkalation der Kationen des Elektrolyten erfolgt und führt zur Aufweitung des Abstands zwischen den Schichten, soweit, dass die zwischenmolekularen Kräfte überwunden werden können, sodass sich einzelne Schichten von der Elektrode abspalten. Somit erfolgt die Exfoliation einer Monolage oder einer dünnen Schicht des Grundmaterials von der Elektrode.

Da beide Elektroden des Elektrodenpaares das zweidimensional geschichtet strukturierte Grundmaterial enthalten erfolgt die Exfolierung simultan an beiden Elektroden E1 und E2.

Es laufen nun im ständigen Wechsel die in den beiden vorhergehenden Abschnitten beschriebenen Prozess an beiden Elektroden E1 und E2 ab. Während also an der einen Elektrode, beispielsweise E1, die anodische Oxidation und Interkalation der Elektrolytanionen stattfindet, werden an der anderen Elektrode E2 diese eingeschobenen Anionen und auch die Sauerstoffdefektstellen reduziert und durch die entstehenden Gase und die Interkalation der Elektrolytkationen die Schichten des Grundmaterials exfoliert.

Kehrt sich die Polarität um, so findet die Abspaltung der Schichten an der E1 statt, bei erneuter Umkehr der Polarität wieder an der E2.

Es werden also im ständigen Wechsel an E1 und E2 Schichten des Grundmaterials abgespalten.

Überraschend hat sich gezeigt, dass die Exfolierung an der Elektrode, die zuerst als Kathode geschalten wird, unter Verwendung von Wechselstrom vergleichbar effizient ist, wie die Exfolierung an der Elektrode, die zuerst als Anode geschalten wird.

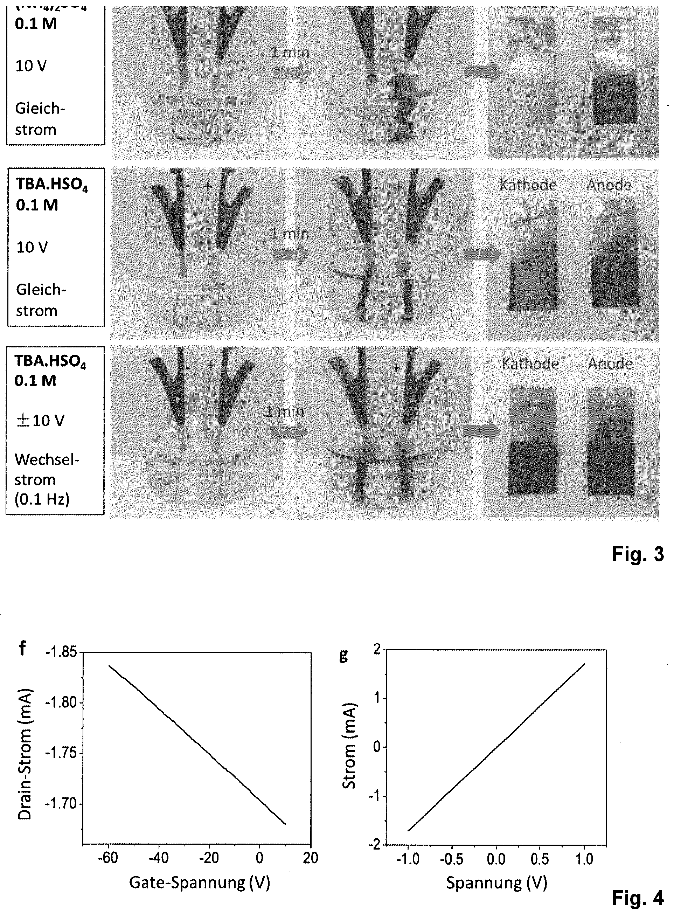

Führt man selbigen Versuch unter Verwendung von Gleichstrom durch und kehrt die Polarität der Elektroden manuell periodisch um, so erfolgt eine gute Exfolierung an der Elektrode, die zuerst als Anode geschaltet war. Allerdings zeigt findet kaum eine Exfolierung an der Elektrode statt, die zuerst als Kathode geschaltet war (siehe Fig. 3).

Vorteilhaft können in dieser Ausführungsform durch das erfindungsgemäße Anlegen eines Wechselstromes / einer Wechselspannung zwischen beiden Elektroden eine simultane Exfoliation an beiden Elektroden und hohe Ausbeuten an exfoliertem Material, also an Halbleiter- oder Leitermaterial erzeugt werden.

Ein weiterer Vorteil dieser Ausführungsform liegt darin, dass keine kostenintensiven Edelmetall-Gegenelektroden, wie beispielsweise von Su et al. verwendet (Su C.Y, Lu A.Y, Xu Y, Chen F.R, Khlobystov A.N, Li L.J. "High-quality thin graphene films from fast electrochemical exfoliation". ACS Nano 2011; 5:2332-9), benötigt werden, um die Elektrolyse durchzuführen. Würde an Stelle des Platins ein unedles Metall verwendet, würde die Umkehr der Polarität zu anodischen Potentialen ein Auflösen des Materials zur Folge haben und ein regelmäßiges Ersetzen der Elektrode erfordern. Nachteilig würde außerdem das Halbleiter- oder Leitermaterial mit den Ionen des Elektrodenmaterials kontaminiert werden.

Bevorzugt beträgt die Umkehrfrequenz des Wechselstromes zwischen 0,001 bis 10 Hz.

In Ausführungsformen der Erfindung beträgt die Umkehrfrequenz des Wechselstromes 0,01 bis 10 Hz, bevorzugt 0,05 bis 1 Hz, insbesondere 0,1 bis 0,2 Hz.

Die Polarität der Elektroden kann also periodisch alle 0,1 bis 1000s wechseln, bevorzugt wechselt sie alle 1 bis 100 s, besonders bevorzugt alle 1 bis 20s, insbesondere alle 5 bis 10 s.

Durch das schnelle, periodische Umschalten der Polarität erfolgt vorteilhaft der Prozess aus Oxidation/Aktivierung des Grundmaterials und Reduktion/Exfolierung schneller und effizienter. Da die Stufe der Oxidation nicht so lang andauert wie aus dem Stand der Technik bekannt, sondern innerhalb einer kurzen Periode sofort die Reduktion erfolgt, enthält das exfolierte Leiteroder Halbleitermaterial vorteilhaft weniger Sauerstoffdefekte.

Vorteilhaft erhöht sich durch das Anlegen eines Wechselstromes der Anteil an Graphenflocken aus Mono- und Bilagen, also Graphen, das nur aus einer oder zwei atomaren Lagen an Kohlenstoff besteht. Hohe Schichtdicken, wie sie sonst aus der kathodischen Exfolierung bekannt sind, werden vorteilhaft vermieden.

Gleichzeitig werden Flocken des Halbleiteroder Leitermaterials mit größerer Ausdehnung im zweistelligen Mikrometerbereich erhalten.

In einer Ausführungsform werden pro Gramm Grundmaterial, das in die Elektrolytlösung taucht, mindestens 100 ml Elektrolytlösung verwendet.

Die Elektrolytlösung enthält neben dem Lösungsmittel mindestens ein gelöstes Tetraalkylammoniumsalz oder mindestens ein gelöstes Tetraalkylammoniumsalz und Schwefelsäure.

In einer erfindungsgemäßen Variante enthält die Elektrolytlösung mindestens ein gelöstes Tetraalkylammoniumsalz.

In einer weiteren Variante enthält die Elektrolytlösung eine Mischung aus Schwefelsäure und mindestens einem gelösten Tetraalkylammoniumsalz.

In einer Ausführungsform beträgt die Konzentration des Salzes oder der Schwefelsäure oder die Gesamtkonzentration von Salz und Schwefelsäure in der Elektrolytlösung mindestens 0,001 M, bevorzugt 0,001 bis 2 M, besonders bevorzugt 0,005 bis 1, 5 M, insbesondere 0,05 bis 0,2 M.

Das in der Elektrolytlösung gelöste Salz ist ausgewählt aus Tetraalkylammoniumsalzen.

Das Kation des Salzes entspricht also der allgemeinen Formel $NR_4^+$, mit R = C1- bis C5-Alkyl, wobei alle R gleich oder voneinander verschieden sein können.

Erfindungsgemäß ist das Anion des Salzes ausgewählt aus Sulfat ($SO_4^{2-}$), Hydrogensulfat ($HSO_4^-$), Thiosulfat ($S_2O_3-$), Sulfit ($SO_3^{2-}$), Nitrat ($NO_3-$) oder Hydroxid (OH-), bevorzugt Sulfat und/oder Hydrogensulfat.

Die Anionen haben einen Durchmesser, mit dem sie während der anodischen Oxidation zwischen die Schichten des zweidimensional geschichtet strukturierten Grundmaterials dringen können, so dass sie den Abstand zwischen den einzelnen Schichten aufweiten. Sulfatanionen haben beispielsweise einen Durchmesser von 0,46 nm.

Die anschließende Gasbildung durch die Reduktion der Anionen treibt die Schichten noch weiter auseinander. Tetrabutylammoniumsalze haben den Vorteil, dass sie, während die Elektrode als Kathode geschaltet ist, anders als Kationen kleinen Durchmessers wie beispielsweise H+ oder Li+ oder Na+, den Abstand zwischen den Schichten auch durch ihre Molekülgröße noch weiter aufdehnen können.

Die bisher im Stand der Technik verwendeten Tetramethyl- oder Tetraethyl-Ammoniumsalze führten jedoch trotzdem nur zu geringen Ausbeuten und niedrigen Produktionsraten an Leiteroder Halbeitermaterial wie Graphen.

In einer Ausführungsform ist das Tetraalkylammoniumsalz Tetrabutylammoniumsulfat (TBAS) und/oder Tetrabutlyammoniumhydrogensulfat, deren Kation jeweils ein Tetrabutylammonium-Kation $(C_4H_9)_4N^+$ (TBA) ist.

Vorteilhaft weist das TBA-Kation durch die Butylketten eine flexible Struktur auf, sodass es im flachen, horizontalen Zustand einen vertikalen Durchmesser von 0,47 nm hat und einfach zwischen die durch die anodische Reaktion schon leicht aufgeweiteten Schichten des Grundmaterials dringen kann. Durch den großen vertikalen Durchmesser des TBA Kations im aufgestellten, vertikalen Zustand von 0,89 nm kann es dann die Schichten so weit auseinanderdehnen, dass die van-der-Waals Kräfte, die zwischen den einzelnen Schichten des Grundmaterials herrschen, überwunden werden und die Schichten so auseinanderdriften.

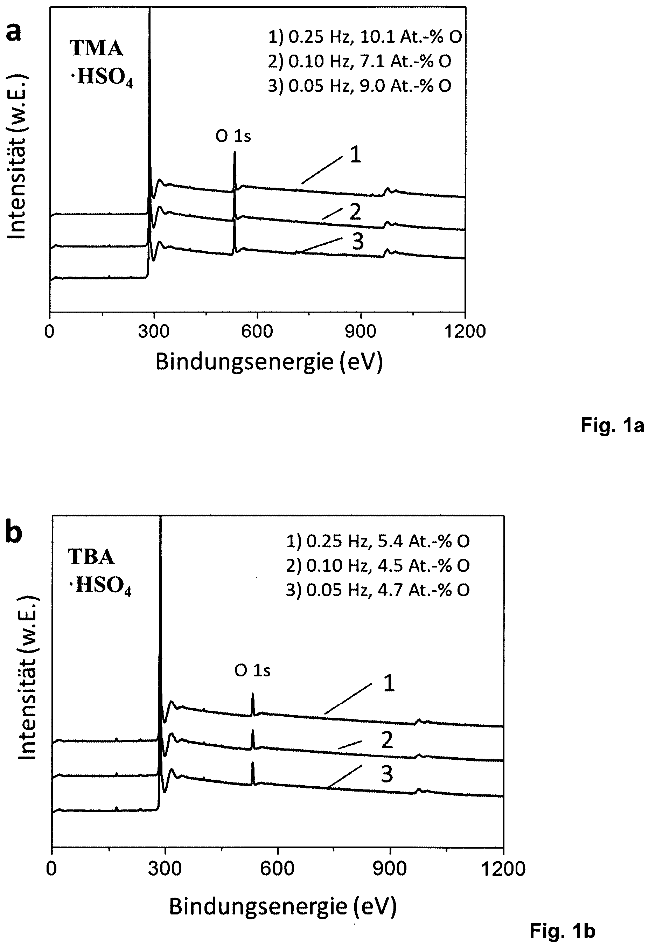

Vorteilhaft resultiert daraus eine hohe Produktionsrate an exfoliertem Leiter- oder Halbleitermaterial, mit geringem Sauerstoffgehalt (Fig.1). Werden beispielsweise 5 Elektrodenpaare, bestehend aus je 2 Graphitfolien mit einer Masse von 1 g gleichzeitig im erfindungsgemäßen Verfahren eingesetzt, so werden Produktionsraten von mindestens 5,5 g exfoliertem Graphen in 15 min, also > 20 g/ h erhalten.

Hohe Ausbeuten bis 85%, bezogen auf die Ausgangsmasse des Grundmaterials, welches in die Elektrolytlösung eintaucht, werden erreicht und man erhält exfoliertes Leiter- oder Halbleitermaterial mit sehr geringen Schichtdicken bzw. sogar einzelnen isolierten Monolagen.

Auch wenn nur eine der beiden Elektroden eines Elektrodenpaares das zweidimensional strukturierte, geschichtete Grundmaterial enthält, so erreicht man hohe Ausbeuten an Leiteroder Halbleitermaterial von bis 85% bezogen auf die Ausgangsmasse des Grundmaterials, welches in die Elektrolytlösung eintaucht.

Enthält die Elektrolytlösung Schwefelsäure, so gestaltet sich das erfindungsgemäße Verfahren vorteilhaft kostengünstig und umweltfreundlicher, da, im Gegensatz zur Verwendung von Ammoniumsalzen, keine stickstoffhaltigen Abwässer entstehen.

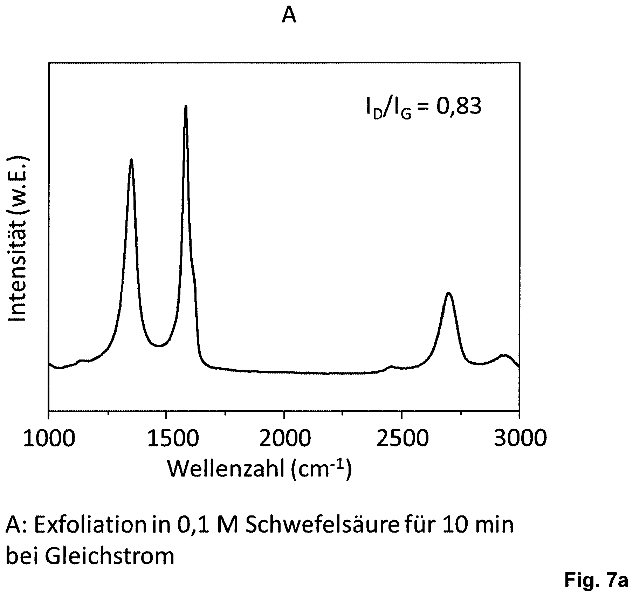

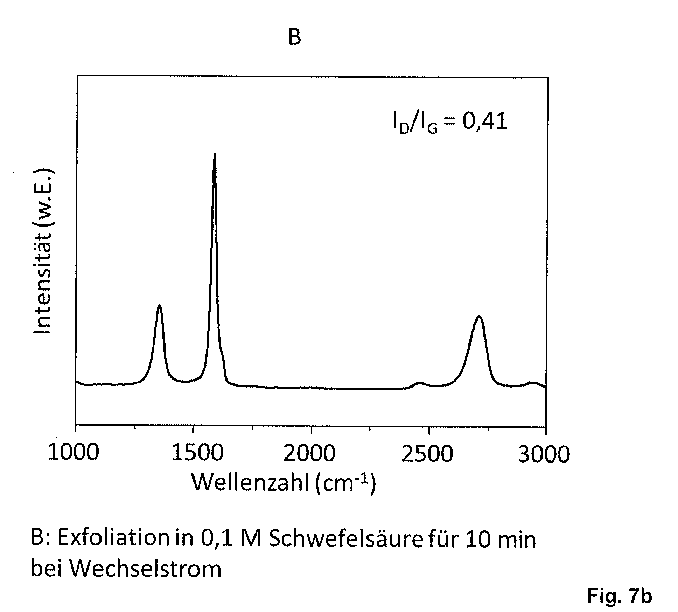

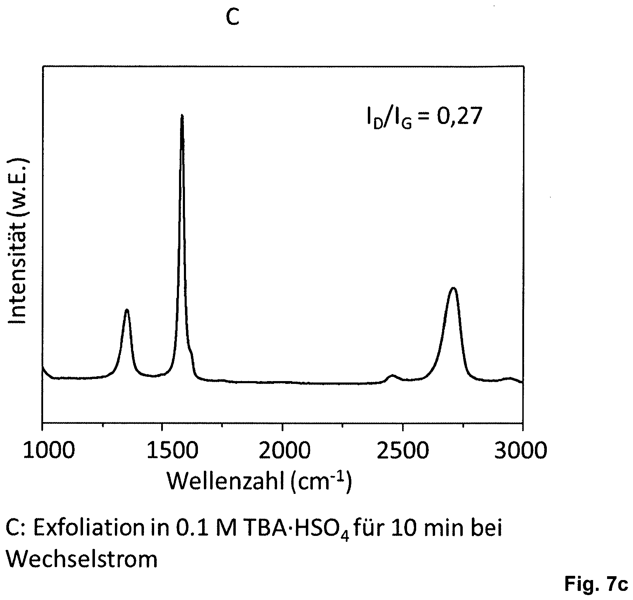

Gegenüber den im Stand der Technik verbreiteten Verfahren der Exfolierung mit Gleichstrom, unter der Verwendung von Schwefelsäure als Elektrolyt, werden hierbei vergleichbare Produktionsraten erzielt. Durch die wechselnden Polaritäten (Oxidation und Reduktion) im erfindungsgemäßen Verfahren wird allerdings die Oxidation des erhaltenen Materials deutlich verringert, und man erhält Material mit wesentlich geringerer Defektdichte (siehe Fig. 7)

In einer Ausführungsform wird die Elektrolyse beendet, wenn das gesamte Grundmaterial exfoliert wurde. In einer weiteren Ausführungsform wird die Elektrolyse bereits vorher beendet.

In einer Ausführungsform erfolgt nach der Elektrolyse die Trennung des exfolierten Materials von der Elektrolytlösung. Dies kann nach den aus dem Stand der Technik bekannten Methoden wie Filtration, Zentrifugation oder Sedimentation erfolgen.

In einer Ausführungsform ist das das zweidimensional geschichtet strukturierte Grundmaterial Graphit. Im erfindungsgemäßen Verfahren werden Ausbeuten an Graphen von 80% bezogen auf das Graphit erreicht. Die Produktionsraten liegen bei 20 g/h im Labormassstab.

Vorteilhaft lässt sich das erfindungsgemäße Verfahren durch Auswahl der Größe der Elektrolysezelle und der eingesetzten Menge an Grundmaterial individuell nach oben skalieren, sodass die Produktion der Leiteroder Halbleitermaterialien im technischen Maßstab in hohen Ausbeuten und hohen Produktionsraten möglich ist.

Gegenstand der Erfindung ist auch die Verwendung des im erfindungsgemäßen Verfahren hergestellten Halbleiter- oder Leitermaterials in Dünnschicht-Elektroden.

Dafür können beispielsweise aus dem erfindungsgemäßen Verfahren hergestellte Graphenflocken aus einer Dispersion auf Substrate, wie Glas, Siliciumträger oder ITO transferiert werden. Es ergeben sich Graphenfilme mit sehr geringen Schichtwiderständen.

Gegenstand der Erfindung ist auch die Verwendung des im erfindungsgemäßen Verfahren hergestellten Halbleiter- oder Leitermaterials in Komposit-Materialien. So können sie mit leitfähigen Polymeren wie PEDOT:PSS gemischt werden, um diese als Bottom-Elektroden in verschiedenen elektronischen Bauelementen einzusetzen.

Die Graphenflocken können beispielsweise auch mit Nanopartikeln verknüpft werden und damit als High Performance Anodenmaterial für Lithiumspeicher dienen (J. Am. Chem. Soc., 2015, 137, 5576).

Gegenstand der Erfindung ist auch die Verwendung des im erfindungsgemäßen Verfahren hergestellten Halbleiter- oder Leitermaterials in Batterien oder Akkumulatoren. Dazu kann beispielsweise Graphen mit kommerziell erhältlichem Kathodenmaterial, wie beispielsweise $LiFePO_4$ zu geringen Gewichtsanteilen, wie beispielsweise 2 m% gemischt und zur Herstellung einer Batterie verwendet werden. Die so hergestellten Graphen-$LiFePO_4$ Komposit- Batterien weisen eine hohe Entladungskapazität auf (siehe Ausführungsbeispiel 3).

Gegenstand der Erfindung ist auch die Verwendung von Tetrabutylammoniumsulfat und/oder Tetrabutylammoniumhydrogensulfat in einem erfindungsgemäßen Verfahren zur Herstellung von Graphen, gekennzeichnet durch einen Anteil an Flocken mit einer Schichtdicke von 1-3 Monolagen von >70% und/oder durch ein C/O Verhältnis von 10 bis 30, und/oder durch einen Sauerstoffgehalt von 0 bis 9 at% und/oder durch eine Lochmobilität von 350 bis 1000 $cm^2 * V^{-1} * S^{-1}$.

Nachfolgende Abbildungen und Ausführungsbeispiele sollen die Erfindung näher erläutern, ohne sie jedoch darauf zu beschränken.

Dabei zeigen:

Fig. 1: XPS Aufnahmen von exfoliertem Graphen aus einer Wechselstrom-Elektrolyse in wässrigen Lösungen von a) Tetramethylammoniumhydrogensulfat und b) Tetrabutylammoniumhydrogensulfat. Die Frequenz des Wechselstromes wurde zwischen 0,05 Hz und 0,25 Hz variiert. Die Arbeitsspannung betrug +/- 10 V, die Konzentration des Elektrolyten betrug 0,1M in Wasser. Es ist deutlich zu sehen, dass der Sauerstoffgehalt des Graphens, wenn es aus Lösung a) exfoliert wird, wesentlich höher ist, als der des Graphens aus Lösung b). Die Verwendung von Tetrabutylammoniumhydrogensulfat führt also zu Graphen mit einem geringeren Sauerstoffgehalt.

Ein geringerer Sauerstoffgehalt bedeutet weniger Defektstellen und damit erhöhte Leitfähigkeit des Graphens.

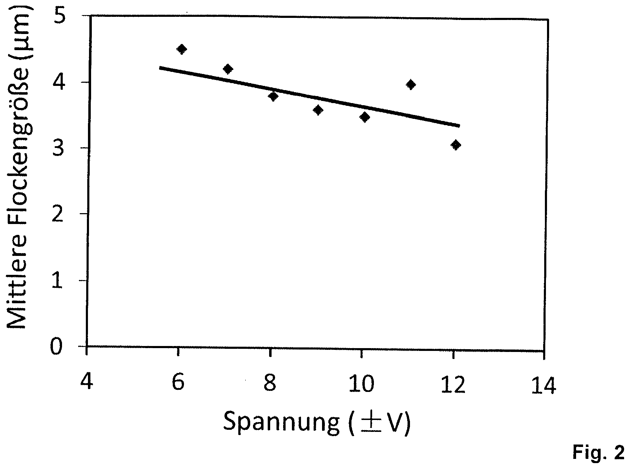

Fig. 2: Die Abhängigkeit der Flockengrösse des exfolierten Graphens von der Arbeitsspannung der Elektrolyse in einer 0,1 M Lösung von Tetrabutylammoniumhydrogensulfat. Die Frequenz des Wechselstromes beträgt 0,1 Hz. Diese Untersuchung zeigt, dass sich mit höherer Spannung die Grösse der Flocken wieder verringert. So wird gezeigt, dass durch die angelegte Spannung die laterale Partikelgröße individuell gesteuert werden kann. Damit können gezielt Materialien für Anwendungen mit unterschiedlichen Ansprüchen an die Partikelgröße hergestellt werden.

Fig. 3: Untersuchung der Auswirkung von Gleichstrom (direct current, Fig. 3 oben und mitte) und Wechselstrom (Alternating current, Fig. 3, untere Abbildung) während der elektrolytischen Exfolierung von Graphen.
In allen drei Versuchen wurden jeweils zwei Graphitfolien als Elektrodenpaar geschaltet, sodass an beiden Elektroden Graphen exfoliert werden könnte.
Es zeigt sich, dass unter der Verwendung von Gleichstrom jeweils nur die Elektrode Graphenschichten exfoliert, die zuerst als Anode geschaltet wird. Die Elektrode, die zuerst als Kathode geschalten ist, zeigt nur wenig exfoliertes Graphen. (oben und mitte)
Bei der Verwendung von Wechselstrom unter gleichen Bedingungen (unten) zeigt gleichwertig gute Exfolierung von Graphen an beiden Elektroden.

Fig. 4f und 4g zeigen die I-V Charakteristiken der Graphenflocken-basierten Feldeffekttransistoren, hergestellt nach Ausführungsbeispiel 2. Es ergibt sich daraus eine Lochmobilität für das erfindungsgemäß hergestellte Graphen von 430 cm$^2$ * V$^{-1}$ * S$^{-1}$.

Fig. 5a zeigt ein Spannungsprofil der EG-LFP Batterie, die mit einer Kapazität von 1C = 170 mAh/g eingesetzt wird und nach dem 20. Zyklus (1) eine Kapazität von 157 mAh/g aufweist. Auch nach dem 200. (2) bzw. 500. (3) Zyklus weist sie noch eine Kapazität von 167 mAh/g auf.

Fig. 5b verdeutlicht die gute Stabilität der Batteriekapazität über 500 Lade- und Entladezyklen mit einer Coulombeffizienz von konstant über 95%.

Fig. 6 zeigt eine AFM Aufnahme exfolierter Graphenflocken. Anhand des Höhenprofils ist erkennbar, dass es sich um eine Monolage Graphen handelt.

Fig. 7 zeigt die Ramanspektren von exfoliertem Graphen zum Nachweis der Anwesenheit von Defektstellen im Material. In Graph A ist sichtbar, dass die Exfolierung mit Schwefelsäure als Elektrolyten unter der Verwendung von Gleichstrom eine hohe Dichte an Sauerstoffdefekten mit sich bringt. (hohe Signalstärke bei 1000 bis 1700 cm$^{-1}$).

Die Verwendung von Schwefelsäure in einer Elektrolyse unter Wechselstrom (B) zeigt dagegen deutlich weniger Sauerstoffdefekte auf, ähnlich wie die Verwendung von Tetrabutylammoniumhydrogensulfat (C).

Ausführungsbeispiel 1

Die Exfolierung von Graphen wurde mit einem Elektrodenpaar, bestehend aus zwei Graphitfolien (1,5 * 5 cm, 100mg pro Folie) (Alfa Aesar) durchgeführt.
Die Elektroden des Elektrodenpaares wurden parallel in einem festen Abstand von 1,5 cm angeordnet. Die Elektrolytlösung wurde hergestellt durch Lösen von Tetrabutylammoniumhydrogensulfat Pulver in entionisiertem Wasser (0,1 M, 1,7 g des Salzes in 50 ml Wasser). Der pH-Wert der Elektrolytlösung wurde mit NaOH auf 7 eingestellt. Ein Wechselstrom mit einer Arbeitsspannung von +/- 10 V und einer Frequenz von 0,1 Hz wurde angelegt, um die Graphenschichten abzuspalten. Die Ausrichtung der anodischen Arbeitsspannung wechselte alle 5 s von positiven zu negativen Werten und zurück. Um ein Überhitzen der Elektrolysezelle zu verhindern, wurde diese während des gesamten Exfolierungsprozess in einem Eisbad gekühlt.
Das in der Elektrolytlösung suspendierte Graphen wurde mittels 0,2 $\mu$m PTFE Membranfilter abgetrennt und dreimal mit Wasser und dreimal mit Ethanol gewaschen, um die Überreste des Elektrolyten zu entfernen.
Es wurden 120 mg Graphen generiert.

Ausführungsbeispiel 2

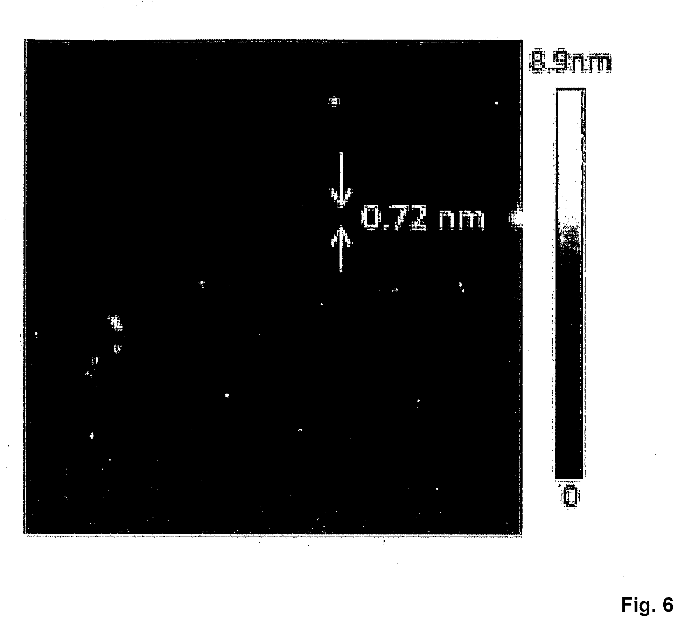

Für eine Herstellung von Graphen im größeren Maßstab wurden 5 Elektrodenpaare aus Graphitfolien (6 * 12 cm, 1,02 g pro Folie) mit je 2 cm Abstand zwischen jedem Elektrodenpaar in Reihe geschalten.
Die Elektrolyse wurde durchgeführt unter denselben Bedingungen, wie in Ausführungsbeispiel 1 aufgeführt. Es wurden jedoch 1000 ml Elektrolytlösung einer Konzentration von 0,1 M verwendet (34 g Tetrabutylammoniumhydrogensulfat in 1000 ml entionisiertem Wasser). Die Exfolierung endete automatisch, wenn das Graphit-Material aufgebraucht war.
Das in der Elektrolytlösung suspendierte Graphen wurde mittels 0,2 $\mu$m PTFE Membranfilter abgetrennt und dreimal mit Wasser und dreimal mit Ethanol gewaschen, um die Überreste des Elektrolyten zu entfernen. Es wurden 5,5 g Graphen in 15 min generiert.
Anschließend wurde das Graphen Pulver im Ultraschallbad in N,N-dimethylformamid dispergiert und konnte so gelagert oder weiterverwendet werden. Dazu wurden 120 mg Graphen in 1 L DMF dispergiert, um eine 0,1 mg/ml Graphen in DMF Dispersion zu erhalten.
AFM Aufnahmen zeigten die Bildung von Monolagen von exfoliertem Graphen **(Fig. 6)**

Die Elementaranalyse wurde mittels EuroEA ElementalAnalyser durchgeführt.

Die XPS Analyse wurde an einem Thermo Scientific K-Alpha X-ray Photoelektronspectrometer durchgeführt mit einem Kammerdruck von ~ $10^{-8}$ - $10^{-9}$ mbar mit einer Al Anode als Röntgenquelle (x-ray radiation = 1486.7 eV) mit Punktgrößen von 400 $\mu$m. Die Spektren wurden mit durchschnittlich 10 Scans aufgenommen, mit einer Energie von 200,00 eV in Stufen von je 1 eV. Hochauflösende Spektren wurden mit durchschnittlich 10 Scans und einer Energie von 50,00 eV in Stufen von je 0,1 eV aufgenommen. Die Ergebnisse sind in Tabelle 1 dargestellt.

Der Sauerstoffanteil des exfolierten Graphens wurde mit 4,5 at% (= Atomprozent = Anteil der Anzahl der Atome an der Gesamtzahl aller Atome in der Verbindung) bestimmt. Das C/O Verhältnis wurde mit 21,2 bestimmt und liegt damit höher als in exfoliertem Graphen aus dem Stand der Technik.

Tabelle 1 - Elementaranalyse und XPS Daten der Graphitfolie und des exfolierten Graphens (EG)

| Sample | Element | EA | XPS |
|---|---|---|---|
| Graphite | C (at %) | 99.57 | 98.21 |
| | H (at %) | -- | N/A |
| | O (at %) | 0.16 | 1.79 |
| | C/O | 622 | 54.9 |
| EG | C (at %) | 95.01 | 95.50 |
| | H (at %) | 0.27 | N/A |
| | O (at %) | 4.61 | 4.50 |
| | C/O | 20.6 | 21.2 |
| N/A: Not applicable | | | |

Zur Bestimmung des Schichtwiderstandes wurde ein Si/SiO2 Substrat mit einer Monolage des exfolierten Graphens beschichtet. Dazu wurden Grahenflocken nach der Langmuir-Blodgett-Methode aufgetragen. Entionisiertes Wasser wurde als Trägerphase verwendet.

Es wurde 1 ml einer DMF Dispersion von exfoliertem Graphen (EG) (0,05mg EG /ml DMF) mit 3 ml Chloroform versetzt und die Mischung vorsichtig mittels Spritze auf eine Wasseroberfläche getropft. Mittels eines Stücks Filterpapier wurde die Oberflächenspannung des Wassers während der Kompression des EG Films kontrolliert. Die erreichte Oberflächenspannung betrug 20 mM/m. Durch vertikales Dip-coating wurde ein dünner Film an EG auf das Silizium-Substrat (mit einer Oxidschicht von 300 nm) transferiert. Die Proben wurden vorsichtig mit entionisiertem Wasser gewaschen und bei 200°C für 30 min im Vakuum getrocknet.

Zur Fabrikation der Graphenflocken-basierten Feldeffekttransistoren wurde eine Platin-schicht von 100 nm Dicke mittels Ionenstrahllithographie auf die Graphenschicht aufgetragen, um die Flocken mit einer Gold source/drain Elektrode zu verbinden.

Die Lochmobilität wurde aus dem linearen Regime der Transferkurven **(Fig.** 4) bestimmt. Man verwendete dazu folgende Gleichung:

$$\mu = \frac{L}{WC_i V_d} \times \frac{\Delta I_d}{\Delta V_g}$$

($C_i$ = dieelektrische Kapazität (11 nF/cm$^2$), L und $W$ = Kanallänge und Kanalweite zwischen source und drain Elektrode, Vg = Gate voltage, Vd = Drain Voltage, Id = Drain Strom, ).

Es ergibt sich aus den I-V Charakteristiken (siehe Fig. 4, f und g) eine Lochmobilität von 430 cm$^2$ * V$^{-1}$ * S$^{-1}$.

Der Schichtwiderstand einer einzelnen Monolage EG wurde an selbigem Bauteil gemessen, der Wert wurde durch folgende Gleichung bestimmt:

$$R_s = R \bullet \frac{W}{L}$$

($R$ = Widerstand bei 0.5 V, L und $W$= Kanallänge und Kanalweite zwischen source und drain Elektrode)
Es ergab sich ein Schichtwiderstand von 1,98 k$\Omega$ sq$^{-1}$.

Der Schichtwiderstand des EG Films wurde in einem 4 Punkt - Probensystem mit einem Keithley 2700 Multimeter (Probenabstand: 0.635 mm, $R_s$=4.532 V/I) gemessen.

Alle Untersuchungen wurden in einer Glove Box, die mit Inertgas gefüllt war, durchgeführt. Verwendet wurde ein Keithley SCS 4200 Semiconductor System.

Ausführungsbeispiel 3

Zur Veranschaulichung des Potentials der Verwendung von erfindungsgemäß hergestelltem Graphen in Batterieapplikationen, wurde kommerziell erhältliches Kathodenmaterial (LiFePO4 Pulver, 20 mg, Partikelgrösse < 5$\mu$m, von Sigma Aldrich) in 40 ml DMF suspendiert um eine homogene Dispersion zu ergeben. Diese wurde anschließend mit 8 ml einer Graphendispersion (0,05mg/ml in DMF) vermischt und im Ultraschallbad behandelt. Die sich so ergebenden Graphen-beschichteten LiFePO$_4$ (EG-LFP) Partikel wurden abfiltriert und über Nacht im Ofen bei 100°C getrocknet.

Die EG-LFP Arbeitselektrode wurde hergestellt durch Vermischen von EG-LFP, Aktivkohle (super-P) und Polyvinylidendifluorid (PVDF) in einem Massenverhältnis von 80:10:10. Die Mischung wurde auf eine Aluminiumfolie aufgetragen, getrocknet und in kreisförmige Zellen mit einem Durchmesser von 10 mm gestanzt. Diese wurden für 12 Stunden im Vakuum bei 80°C getrocknet.

Knopfzellen des Typs CR 2032 wurden unter inerter Atmosphäre mit Lithiumfolie (Sigma Aldrich) als Gegenelektrode bestückt und Polypropylen als Separator. Ein Elektrolyt wurde hergestellt aus 1M LiPF6 in Ethylencarbonat/Diethylcarbonat (3:7 v/v, mit 2 m% Vinylcarbonat) und die Batterien damit befüllt. Die EG-LFP Arbeitselektrode wurde eingebaut.

Alle Untersuchungen zur Bestimmung der Ladungs- und Entladungskurven und Zyclen wurden mittels eines LAND Batterie Systems unter Raumluftbedingungen durchgeführt.

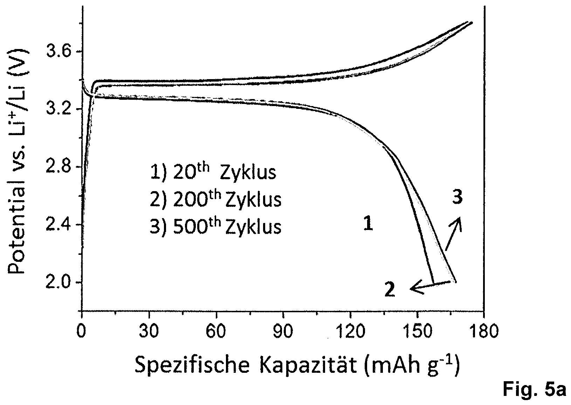

Fig. 5a zeigt ein Spannungsprofil der EG-LFP Batterie, die mit einer Kapazität von 1C = 170 mAh/g eingesetzt wird und nach dem 20. Zyklus (1) eine Kapazität von 157 mAh/g aufweist. Auch nach dem 200. (2) bzw. 500. (3) Zyclus weist sie noch eine Kapazität von 167 mAh/g auf.

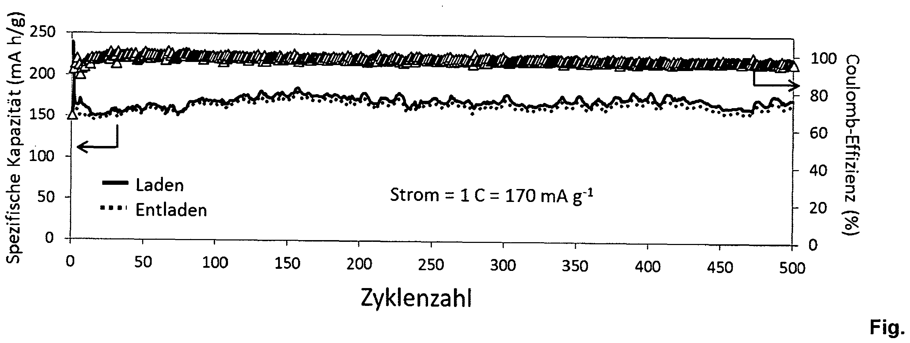

Fig. 5b verdeutlicht die gute Stabilität der Batteriekapazität über 500 Lade- und Entladezyklen mit einer Coulombeffizienz von konstant über 95%.

**Patentansprüche**

1. Verfahren zur Herstellung eines Halbleiter- oder Leitermaterials aus einem zweidimensional geschichtet strukturierten Grundmaterial durch elektrolytische Exfolierung, in einer Elektrolysezelle, umfassend mindestens ein Elektrodenpaar aus einer ersten und einer zweiten Elektrode, und eine Elektrolytlösung, enthaltend mindestens ein gelöstes Salz oder ein gelöstes Salz und Schwefelsäure , wobei beide Elektroden eines Elektrodenpaares das zweidimensional geschichtet strukturierte Grundmaterial enthalten , und

   wobei das Salz ausgewählt ist aus Tetraalkylammoniumsalzen, und

   wobei das Anion des Salzes ausgewählt ist aus Sulfat ($SO_4^{2-}$), Hydrogensulfat ($HSO_4^-$), Thiosulfat ($S_2O_3^-$), Sulfit ($SO_3^{2-}$) , Nitrat ($NO_3^-$) oder Hydroxid ($OH^-$) , und

   wobei während der Elektrolyse die Polarität der ersten und zweiten Elektrode periodisch umgekehrt wird,

   **dadurch gekennzeichnet, dass** die Umkehr der Polarität der Elektroden durch Anlegen einer Wechselspannung erfolgt.

2. Verfahren nach Anspruch 1, **dadurch gekennzeichnet, dass** das Halbleiter- oder LeiterMaterial ausgewählt ist aus Graphen, kohlenstoffbasierten Halbleiter- oder Leiter-Polymeren und/oder geschichteten Chalcogeniden.

3. Verfahren nach einem der Ansprüche 1 oder 2, **dadurch gekennzeichnet, dass** das zweidimensional strukturierte Grundmaterial ausgewählt ist aus Graphit, kohlenstoffbasierten Halbleiter- oder Leiter-Polymeren in Form von zweidimensional strukturiertem Grundmaterial und/oder geschichteten Chalcogeniden.

4. Verfahren nach einem der Ansprüche 1 bis 3, **dadurch gekennzeichnet, dass** die Wechselspannung +/- 2 V bis +/-20 V beträgt.

5. Verfahren nach einem der Ansprüche 1 bis 4, **dadurch gekennzeichnet, dass** die Umkehrfrequenz der Wechselspannung 0,001 bis 10 Hz beträgt.

6. Verfahren nach einem der Ansprüche 1 bis 5, **dadurch gekennzeichnet, dass** das Tetra-alkylammoniumsalz Tetrabutylammoniumsulfat und/oder Tetrabutylammoniumhydrogensulfat ist.

7. Verfahren nach einem der Ansprüche 1 bis 6, **dadurch gekennzeichnet, dass** mindestens eine Elektrode das Grundmaterial in Form von Flocken, Brocken, Folien, Fasern oder einer Mischung dieser enthält.

8. Verwendung des Halbleiter- oder Leiter-Materials, hergestellt in einem Verfahren gemäß einem der Ansprüche 1 bis 7 in Dünnschicht-Elektroden.

9. Verwendung des Halbleiter- oder Leiter-Materials, hergestellt in einem Verfahren gemäß einem der Ansprüche 1 bis 7 in Komposit Materialien.

10. Verwendung des Halbleiter- oder Leiter-Materials, hergestellt in einem Verfahren gemäß einem der Ansprüche 1 bis 7 in Batterien oder Akkumulatoren.

11. Verwendung von Tetrabutylammoniumsulfat und/oder Tetrabutylammoniumhydrogensulfat in einem Verfahren gemäß der Ansprüche 1 bis 7 zur Herstellung von Graphen, **gekennzeichnet durch** einen Anteil an extrudierten Flocken mit einer Schichtdicke von 1-3 Monolagen von >70%, ein C/O Verhältnis von 10 bis 30, einem Sauerstoffgehalt von 0 bis 9 at% und einer Lochmobilität von 350 bis 1000 $cm^2 * V^{-1} * s^{-1}$.

**Claims**

1. Method for producing a semiconductor material or conductor material from a two-dimensionally layered structured basic material by means of electrolytic exfoliation, in an electrolytic cell comprising at least one electrode pair consisting of a first and a second electrode, and an electrolyte solution containing at least one dissolved salt or one dissolved salt and sulfuric acid, both electrodes of an electrode pair containing the two-dimensionally layered structured basic material, and the salt being selected from tetraalkylammonium salts, and the anion of the salt being selected from sulfate ($SO_4^{2-}$), hydrogen sulfate ($HSO_4^-$), thiosulfate ($S_2O_3^-$), sulfite ($SO_3^{2-}$), nitrate ($NO_3^-$) or hydroxide ($OH^-$), and the polarity of the first and second electrode being periodically reversed during the electrolysis, **characterised in that** the polarity of the electrodes is reversed by applying an alternating voltage.

2. Method according to claim 1, **characterised in that** the semiconductor material or conductor material is selected from graphene, carbon-based semiconductor or conductor polymers and/or layered chalcogenides.

3. Method according to either claim 1 or claim 2, **characterised in that** the two-dimensionally structured basic material is selected from graphite, carbon-based semiconductor or conductor polymers in the form of two-dimensionally structured basic material and/or layered chalcogenides.

4. Method according to any of claims 1 to 3, **characterised in that** the alternating voltage is +/- 2 V to +/- 20 V.

5. Method according to any of claims 1 to 4, **characterised in that** the reversal frequency of the alternating voltage is 0.001 to 10 Hz.

6. Method according to any of claims 1 to 5, **characterised in that** the tetraalkylammonium salt is tetrabutylammonium sulfate and/or tetrabutylammonium hydrogen sulfate.

7. Method according to any of claims 1 to 6, **characterised in that** at least one electrode contains the basic material in the form of flakes, lumps, foils, fibres, or a mixture thereof.

8. Use of the semiconductor material or conductor material produced in a method according to any of claims 1 to 7 in thin-film electrodes.

9. Use of the semiconductor material or conductor material produced in a method according to any of claims 1 to 7 in composite materials.

10. Use of the semiconductor material or conductor material produced in a method according to any of claims 1 to 7 in batteries or rechargeable batteries.

11. Use of tetrabutylammonium sulfate and/or tetrabutylammonium hydrogen sulfate in a method according to claims 1 to 7 for producing graphene, **characterised by** a proportion of extruded flakes having a layer thickness of 1-3 monolayers of >70%, a C/O ratio of 10 to 30, an oxygen content of 0 to 9 at.% and a hole mobility of 350 to 1000 $cm^2 * V^{-1} * S^{-1}$.

**Revendications**

1. Procédé de production d'un matériau semi-conducteur ou conducteur à partir d'un matériau de base structuré en couches bidimensionnelles par exfoliation électrolytique, dans une cellule électrolytique, comprenant au moins une paire d'électrodes constituée d'une première et d'une seconde électrode et une solution d'électrolyte contenant au moins un sel dissous ou un sel dissous et de l'acide sulfurique, les deux électrodes d'une paire d'électrodes contenant le matériau de base structuré en couches bidimensionnelles, et
le sel étant choisi parmi les sels de tétra-alkylammonium, et
l'anion du sel étant choisi parmi un sulfate ($SO_4^{2-}$), un hydrogénosulfate ($HSO_4^-$) un thiosulfate ($S_2O_3^-$), un sulfite ($SO_3^{2-}$), un nitrate ($NO_3^-$) ou un hydroxyde ($OH^-$), et
la polarité de la première et de la seconde électrode étant périodiquement inversée lors de l'électrolyse, **caractérisé en ce que** la polarité des électrodes est inversée par application d'une tension alternative.

2. Procédé selon la revendication 1, **caractérisé en ce que** le matériau semi-conducteur ou conducteur est choisi parmi le graphène, les polymères semi-conducteurs ou conducteurs à base de carbone et/ou les chalcogénures en couches.

3. Procédé selon l'une des revendications 1 ou 2, **caractérisé en ce que** le matériau de base à structure bidimensionnelle est choisi parmi le graphite, les polymères semi-conducteurs ou conducteurs à base de carbone sous forme de matériau de base à structure bidimensionnelle et/ou les chalcogénures en couches.

4. Procédé selon l'une des revendications 1 à 3, **caractérisé en ce que** la tension alternative est de +/- 2 V à +/- 20 V.

5. Procédé selon l'une des revendications 1 à 4, **caractérisé en ce que** la fréquence d'inversion de la tension alternative est de 0,001 à 10 Hz.

6. Procédé selon l'une des revendications 1 à 5, **caractérisé en ce que** le sel de tétra-alkylammonium est le sulfate de tétra-butylammonium et/ou l'hydrogénosulfate de tétra-butylammonium.

7. Procédé selon l'une des revendications 1 à 6, **caractérisé en ce qu'**au moins une électrode contient le matériau de base sous forme de flocons, morceaux, feuilles, fibres ou un mélange de ceux-ci.

8. Utilisation du matériau semi-conducteur ou conducteur produit dans un procédé selon l'une des revendications 1 à 7 dans des électrodes à couche mince.

9. Utilisation du matériau semi-conducteur ou conducteur produit dans un procédé selon l'une des revendications 1 à 7 dans des matériaux composites.

10. Utilisation du matériau semi-conducteur ou conducteur produit dans un procédé selon l'une des revendications 1 à 7 dans des piles ou accumulateurs.

11. Utilisation d'un sulfate de tétra-butylammonium et/ou d'un hydrogénosulfate de tétra-butylammonium dans un procédé selon les revendications 1 à 7 pour la production de graphène, **caractérisée par** une proportion de flocons extrudés dotés d'une épaisseur de couche de 1 à 3 monocouches > 70 %, un rapport C/O de 10 à 30, une teneur en oxygène de 0 à 9 %at et une mobilité de trous de 350 à 1000 $cm^2 * V^{-1} * S^{-1}$.

Fig. 1a

Fig. 1b

Fig. 2

**Fig. 3**

**Fig. 4**

Fig. 5a

Fig.

**Fig. 6**

A

$I_D/I_G = 0,83$

Intensität (w.E.)

Wellenzahl (cm$^{-1}$)

A: Exfoliation in 0,1 M Schwefelsäure für 10 min
bei Gleichstrom

Fig. 7a

B

$I_D/I_G = 0,41$

Intensität (w.E.)

Wellenzahl (cm$^{-1}$)

B: Exfoliation in 0,1 M Schwefelsäure für 10 min
bei Wechselstrom

**Fig. 7b**

C

$I_D/I_G = 0{,}27$

Intensität (w.E.)

Wellenzahl (cm$^{-1}$)

C: Exfoliation in 0.1 M TBA·HSO$_4$ für 10 min bei Wechselstrom

**Fig. 7c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2878709 A1

**In der Beschreibung aufgeführte Nicht-Patentliteratur**

- **K. S. NOVOSELOV ; A. K. GEIM ; S. V. MOROZOV ; D. JIANG ; Y. ZHANG ; S. V. DUBONOS ; I. V. GRIGORIEVA ; A. A. FIRSOV.** *Science,* 2004, vol. 306, 666-669
- **V. LEON ; M. QUINTANA ; M. A. HERRERO ; J. L. G. FIERRO ; A. D. I. HOZ ; M. PRATO ; E. VAZQUEZ.** *Chem. Commun.,* 2011, vol. 47, 10936-10938
- **Z. Y. XIA ; S. PEZZINI ; E. TREOSSI ; G. GIAMBASTIANI ; F. CORTICELLI ; V. MORANDI ; A. ZANELLI ; V. BELLANI ; V. PALERMO.** *Adv. Funct. Mater.,* 2013, vol. 23, 4684-4693
- **A. CIESIELSKI ; P. SAMORI.** *Chem. Soc. Rev.,* 2014, vol. 43, 381-398
- **W.S. HUMMERS et al.** *J. Am. Chem. Soc.,* 1958, vol. 80 (6), 1339
- **C. GÓMEZ-NAVARRO ; R. T. WEITZ ; A. M. BITTNER ; M. SCOLARI ; A. MEWS ; M. BURGHARD ; K. KERN.** *Nano Lett.,* 2007, vol. 7, 3499-3503
- **F. BONACCORSO ; A. BARTOLOTTA ; J. N. COLEMAN ; C. BACKES.** *Adv. Mater.,* 2016, vol. 28, 6136-6166
- **A. CIESIELSKI ; S. HAAR ; M. EI GEMAYEL ; H. YANG ; J. CLOUGH ; G. MELINTE ; M. GOBBI ; E. ORGIU ; M. V. NARDI ; G. LIGORIO.** *Angew. Chem. Int. Ed.,* 2014, vol. 53, 10355-10361
- **J. N. COLEMAN.** *Acc. Chem. Res.,* 2013, vol. 46, 14-22
- **P. YU et al.** *Curr. Opinion in Colloid Interface Science,* 2015, vol. 20, 329-338
- **C. T. J. LOW ; F. C. WALSH ; M. H. CHAKRABARTI ; M. A. HASHIM ; M. A. HUSSAIN.** *Carbon,* 2013, vol. 54, 1-21
- **X. WANG ; P. F. FULVIO ; G. A. BAKER ; G. M. VEITH ; R. R. UNOCIC ; S. M. MAHURIN ; M. CHI ; S. DAI.** *Chem. Commun.,* 2010, vol. 46, 4487-4489
- **K. S. RAO ; J. SENTILNATHAN ; H.-W. CHO ; J.-J. WU ; M. YOSHIMURA.** *Adv. Funct. Mater.,* 2015, vol. 25, 298-305
- **K. PARVEZ ; R. LI ; S. R. PUNIREDD ; Y. HERNANDEZ ; F. HINKEL ; S. WANG ; X. FENG ; K. MÜLLEN.** *ACS Nano,* 2013, vol. 7, 3598-3606
- **K. PARVEZ ; Z.-S. WU ; R. LI ; X. LIU ; R. GRAF ; X. FENG ; K. MÜLLEN.** *J. Am. Chem. Soc.,* 2014, vol. 136, 6083-6091
- **S. YANG ; S. BRÜLLER ; Z.-S. WU ; Z. LIU ; K. PARVEZ ; R. DONG ; F. RICHARD ; P. SAMORÌ ; X. FENG ; K. MÜLLEN.** *J. Am. Chem. Soc.,* 2015, vol. 137, 13927-13932
- **Z. ZENG ; Z. YIN ; X. HUANG ; H. LI ; Q. HE ; G. LU ; F. BOEY ; H. ZHANG.** *Angew. Chem. Int. Ed.,* 2011, vol. 50, 11093-11097
- **A. J. COOPER ; N. R. WILSON ; I. A. KINLOCH ; R. A. W. DRYFE.** *Carbon,* 2014, vol. 66, 340-350
- **A. M. ABDELKADER ; I. A. KINLOCH ; R. A. W. DRYFE.** *ACS Appl. Mater. Interfaces,* 2014, vol. 6, 1632-1639
- **LIU J ; YANG H ; ZHEN SG ; POH CK ; CHAURASIA A ; LUO J et al.** A green approach to the synthesis of high-quality graphene oxide flakes via electrochemical exfoliation of pencilcore. *RSC Adv.,* 2013, vol. 3, 11745-50
- **SU C.Y ; LU A.Y ; XU Y ; CHEN F.R ; KHLOBYSTOV A.N ; LI L.J.** High-quality thin graphene films from fast electrochemical exfoliation. *ACS Nano,* 2011, vol. 5, 2332-9
- **SU C.Y ; LU A.Y ; XU Y ; CHEN F.R ; KHLOBYSTOV A.N ; LI L.J.** High-quality thin graphene films from fast electrochemical exfoliation. *ACS Nano,* 2011, vol. 5, 2332-9
- *J. Am. Chem. Soc.,* 2015, vol. 137, 5576